# EUROPEAN PATENT SPECIFICATION

(11) **EP 0 404 259 B1**
(45) Date of publication and mention of the grant of the patent: **10.05.1995**
(21) Application number: 90201603.9
(22) Date of filing: 19.06.1990
(51) Int. Cl.: F24H 1/52, F24H 1/36, F24H 1/32

(54) **Laminated heat exchanger structure for a domestic heating device**
Mehrschichtiges Gefüge für Wärmetauscher für Haushaltserwärmungvorrichtung
Structure stratifiée d'échangeur de chaleur pour appareil de chauffage domestique

(30) Priority: 21.06.1989 NL 8901559
(43) Date of publication of application: 27.12.1990
(73) Proprietor: NEFIT FASTO B.V., NL-7418 BB Deventer (NL)
(72) Inventor: Vloon, Paulus Jocobus, NL-7422 RM Deventer (NL); Wierenga, Hendrik Jacob Lammert, NL-8196 KC Welsum (NL)
(74) Representative: Timmers, Cornelis Herman Johannes

(56) References cited:
- EP-A- 0 166 437
- AT-B- 387 272
- BE-A- 767 617
- NL-A- 7 502 700
- The Heat Exchanger Design Handbook (Vol.4, Chapter 4.4.3) VDI Verlag Hemisphere Publishing Co.n

## Description

The invention relates to a domestic heating device for supplying hot central heating water and hot domestic water, comprising a heat exchanger through which hot flue gases from a burner are guided giving off heat to a medium to be heated, said heat exchanger comprising ducts for the flue gases and ducts for the medium to be heated. Such a heat exchanger is generally known in a large number of embodiments.

A disadvantage of the known heat exchangers is that they take up a large amount of space. Another disadvantage is that it always takes some time before the medium to be heated is heated up to the desired temperature.

Heat exchangers which are used for the heating of heating water (central heating water) and of domestic water (tap water) are known per se. In this case two groups of ducts are formed by concentric pipes, the outer pipe being used for heating water and the inner pipe for domestic water. This known design has the disadvantage that during the demand for domestic water the heating water has to circulate through the heat exchanger, since the heat is transferred via the heating water to the domestic water. This means that during the demand for domestic water the heating pump has to continue operating, and the three-way valve which is present has to be switched over to make the heating water circulate quickly through the heat exchanger.

The object of the invention is to provide a domestic heating device for supplying hot central water and hot domestic water, comprising a heat exchanger of which the construction is compact and considerably simplified, and which has a considerably shorter heating-up time than the hitherto known devices.

This object is achieved according to the invention with the features of claim 1 Further advantages of the invention are set forth in the dependent claims.

A heat exchanger which is made up of plate-type elements is known per se from "The Heat Exchanger Design Handbook" (Vol. 4, chapter 4.4.3) of VDI Hemisphere Publishing Co., which has the advantage that the contact surfaces between the individual plate-type elements can be selected to be large enough for a good conduction of heat between the individual plates to be obtained. Using a heat exchanger for a domestic heating device made up of plate-type elements, the ratio between the heat exchanging surface on the water side and the heat exchanging surface on the flue gas side lies approximately between 1 : 3 and 1 : 1, the partitions between the medium to be heated and the flue gases assuming approximately the temperature of the medium to be heated. This means that the unit forming the heat exchanger needs to be heated only to approximately 60 °C. In conventional heat exchangers the temperature at the flue gas side surface is approximately 140 °C. As a result of the relatively lower temperature of the heat exchanger according to the invention, it thus requires less heating time and will therefore be able to heat the media to be heated to the desired temperature quickly.

As a result of the bridges between the individual plate-type elements, the pump for the heating water can be stopped during the demand for domestic water, so that the heating water in the heat exchanger stands still.

The heat of the flue gases is transferred to the domestic water via the bridges between the plate-type elements, without the heating water being heated excessively.

Preferably a duct for the first medium to be heated is separated from a duct for a second medium to be heated by a flue gas duct. The media to be heated, both consisting of water but with a different use, here in this way are well controlled separated from each other, which makes mixing of the media impossible.

According to a particularly advantageous embodiment of the heat exchanger of the domestic heating device according to the invention the unit comprises an internal space, said space forming a combustion chamber, which on the one side can be supplied through ducts with gaseous fuel and combustion air and from which on the other side through flue gas ducts flue gases can be removed. In this way the burner is integrated fully in the unit forming the heat exchanger while the supply ducts for the fuel and the combustion air and the flue for the flue gases can be connected directly to the heat exchanger, so that it is possible to dispense with the construction of a separate combustion chamber and a burner. Dispensing with a combustion chamber, generally made of sheet material and provided with insulation, and dispensing with a separate burner and with combining these components results into a considerable saving. Integrating the burner with combustion space in the heat exchanger means that the whole heating unit can be manufactured considerably more cheaply, and the dimensions of the unit can be reduced to a minimum.

As a result of the stricter standards currently set as regards the NOₓ concentration in the flue gases, there is a tendency to increase the surface area of the burner, so that the loading per unit surface of the burner becomes smaller. On the other hand, one wants to make the heat exchanger as small and compact as possible. These standards are met by designing, according to the invention, the space forming the combustion chamber in such a way that the surface on which the combustion of the combustible mixture takes place is greater than the surface lying opposite it through which the flue gases escape. In this case the burner surface in fact lies partially round the heat exchanger.

According to a preferred embodiment of the invention, the ducts for the media to be heated at least partially extend round the internal space forming the combustion chamber. This design has the advantage that the internal combustion space is cooled by the media to be heated, so that expansion and bursting of the elements forming the combustion chamber are avoided.

The invention is explained in greater detail with reference to the drawing, in which:
Fig. 1 shows a top view of a part of a first embodiment of a heat exchanger according to the invention;
Fig. 2 shows a cross-section along the line II-II of the heat exchanger according to Fig. 1;
Fig. 3 shows a cross-section along the line III-III of the heat exchanger according to Fig. 1;
Fig. 4 shows a cross-section along the line IV-IV of the heat exchanger according to Fig. 1;
Fig. 5 shows a schematic perspective view of a part of a second embodiment of a heat exchanger according to the invention; and
Fig. 6 shows on an enlarged scale a detail of the layered construction of the unit of Fig. 5.

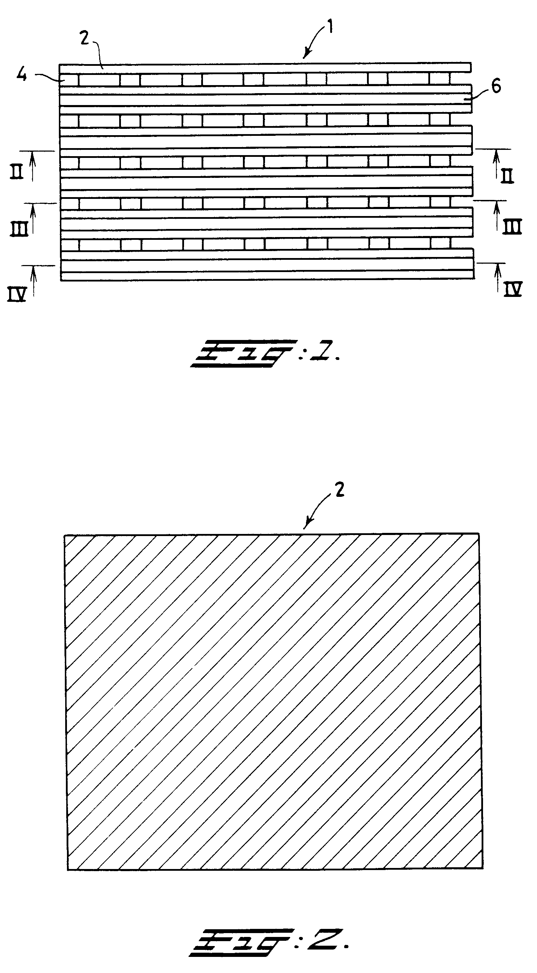

In Fig. 1 a heat exchanger 1 according to the invention is made up of three different plate-type elements 2, 4 and 6 which in the figure from top to bottom are placed in the order 2 - 4 - 2 - 6 - 2 - 4 - 2 - 6 - 2 - 4 - 2 - 6 - 2 - 4 - 2 - 6 - 2 - 4 - 2 - 6 - 2 against each other and are connected to each other to form a unit.

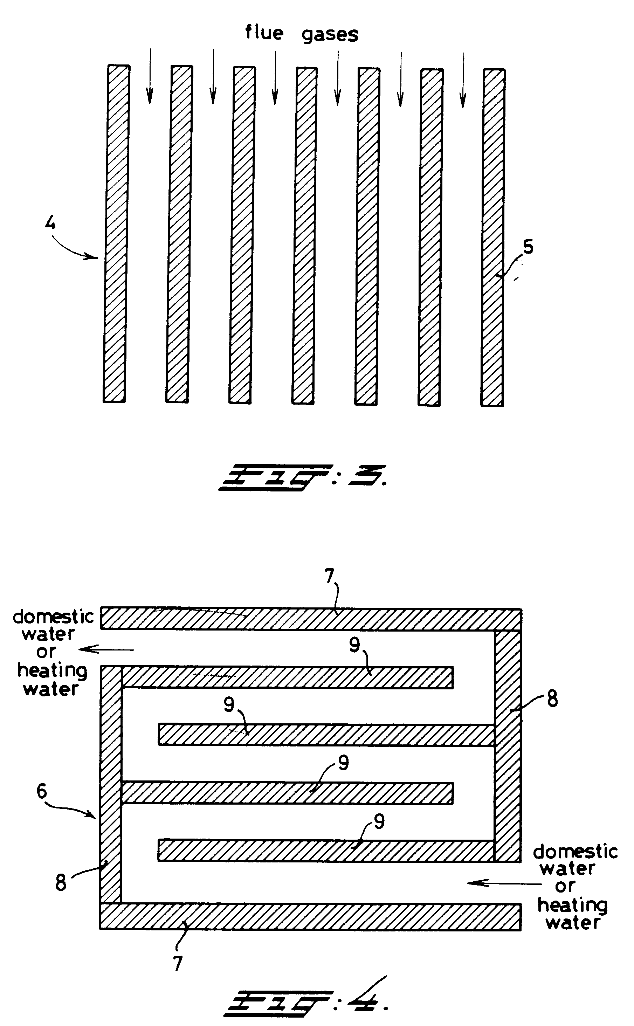

In Fig. 2, 3 and 4 cross-sections are shown of elements 2, 4 and 6, respectively. Element 2 is a rectangular plate, element 4 comprises in the horizontal direction evenly spaced strips 5, and element 6 comprises two strips 7, two strips 8 and four strips 9 of unequal length.
The strips 5, 7, 8 and 9 may in turn be made up of thinner strips.

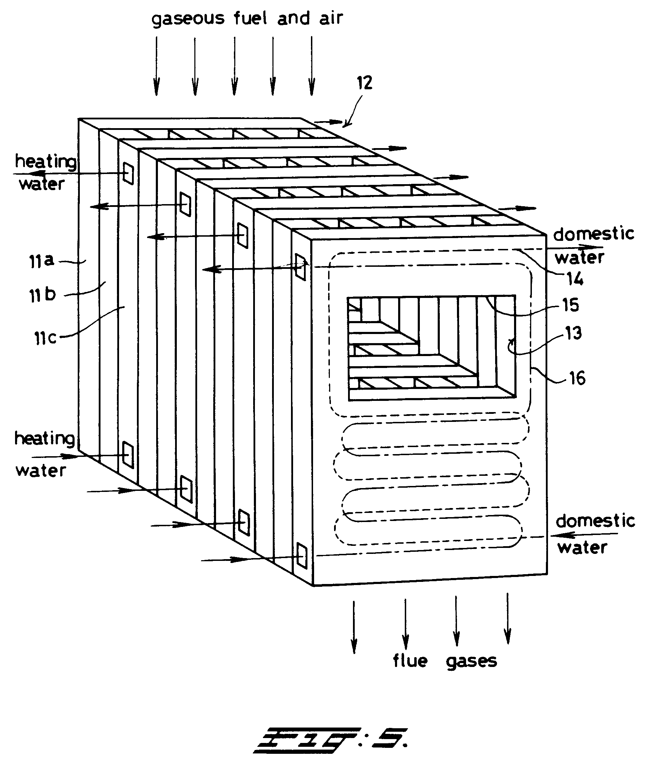

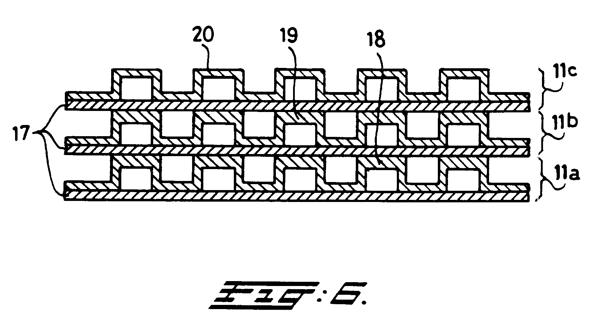

In the heat exchanger 1 the element 4 which is placed between two elements 2 forms six ducts for flue gases, which may flow as indicated in Fig. 3 with downwards directed arrows. The element 6 which is placed between two elements 2 forms a winding duct for, for example, domestic water or heating water, which is, at the in Fig. 3 indicated direction of flow of the flue gases, guided through the duct preferably in the direction which is indicated with arrows in Fig. 4.

The structure of heat exchanger 1 is such that a water duct is always separated from another water duct by flue gas ducts. In this way mixing of water from one water duct with water from another water duct by leakage is impossible.

In Fig. 5 a second embodiment of the heat exchanger according to the invention is made up of a number of plate-type elements 11a, 11b and 11c, which are placed against each other and interconnected to form a unit 12. The unit 12 has an internal space 13 which serves as a combustion chamber in the manner to be described below.

The embodiment shown in Fig. 5 comprises three types of plate-type elements 11a, 11b and 11c, these three types of plate-type elements always being placed in the same order adjacent to each other. The plate-type element 11a is for conveying domestic water along the path indicated by the dotted line 14 in Fig. 5. For this purpose, these elements 11a are provided with an inlet and outlet aperture, but these are not shown in the drawing. The next plate-type element 11b forms a through duct to which a gas and air supply is connected at one side and a flue for flue gases at the other. These ducts are interrupted by the internal space 13, which forms a combustion space for the combustible gas/air mixture. The gas/air mixture fed in burns here near the top wall 15 of the space 13, the flames being directed downwards and the flue gases being directed downwards, and the flue gases being discharged downwards. Finally the plate-type element 11c is for conveying heating water which flows through this element along the path 16 indicated by dash-dot lines. The hot flue gases flowing down through the elements 11b give, in the process, off their heat to the media flowing through the adjacent elements, i.e. domestic water and heating water.

The actual lay-out of the heat exchanger is better shown in Fig. 6, which shows a schematic cross-section on a larger scale of a detail of the unit of Fig. 5 showing the plate-type structure.

As can be seen clearly in Fig. 6, the layers 11a, 11b and 11c each in fact comprise two plates, namely a partition plate 17 and a plate 18, 19 and 20, respectively. The plates 18, 19 and 20 with the adjacent partition plates each form a duct for the heating water, the flue gases and the domestic water, and said ducts can be of any desired shape. The plates 18, 19 and 20 also ensure a good heat transfer from one plate 17 to the next plate 17. The plates can be 0.2 - 2 mm thick in practice and can be made of any suitable material, but preferably of a ceramic material.

When the surface on which the combustion of the gas/air mixture takes place is made greater than the surface over which the flue gases escape from the combustion chamber, this corresponds to the wish to make the burner surface of the heating device as large as possible in order to restrict the NOₓ concentration of the flue gases to a minimum.

## Claims

1. Domestic heating device for supplying hot central heating water and hot domestic water, comprising a heat exchanger (1) being made up of a number of thin-walled elements (2, 4, 6; 17, 11a, 11b, 11c) interconnected to form a unit characterized in that, the elements (2, 4, 6; 17, 11a, 11b, 11c) are arranged to define separate ducts for the flue gases, the central heating water and the domestic water; the partitions between the adjacent separate ducts are formed by thin walled plate-type elements (2, 17) placed opposite to each other; said thin-walled plate-type elements are interconnected by bridges consisting of strips (5; 7-9; 18-20) which conduct heat well, whereby said heating device is controllable in such a way that the flow of the central heating water through the heat exchanger by a pump, can be halted when the domestic water is flowing, and the central heating water can flow through the heat exchanger by said pump when the flow of domestic water is halted.

2. Domestic heating device according to claim 1, characterized in that each duct for the domestic water to be heated is separated from an adjacent duct for central heating water to be heated by a flue gas duct.

3. Domestic heating device according to claim 1 or 2, characterized in that the bridges in the flue gas ducts consist of parallel strips (5) and in that the bridges in the water ducts consist of zig-zag strips (7-9) lying perpendicular to the parallel strips (5).

4. Domestic heating device according to one of the claims 1-3, characterized in that the unit comprises an internal space (13), said space forming a combustion chamber, which on the one side can be supplied through ducts with gaseous fuel and combustion air and from which on the other side through flue gas ducts flue gases can be removed.

5. Domestic heating device according to claim 4, characterized in that the ducts (14, 16) for the media to be heated at least partially extend round the internal space (13) forming the combustion chamber.

## Patentansprüche

1. Hausheizungsvorrichtung für die Versorgung mit heißem Zentralheizungswasser und heißem Haushaltswasser, mit einem Wärmetauscher (1), der aus einer Anzahl dünnwandiger Elemente (2, 4, 6; 17, 11a, 11b, 11c) gefertigt ist, die miteinander verbunden sind, um eine Einheit zu bilden, dadurch gekennzeichnet, daß die Elemente (2, 4, 6; 17, 11a, 11b, 11c) so angeordnet sind, daß sie gesonderte Kanäle für die Abgase, das Zentralheizungswasser und das Haushaltswasser bilden; die Trennwände zwischen den aneinander grenzenden, gesonderten Kanälen durch dünnwandige, plattenartige Elemente (2, 17) gebildet sind, die einander gegenüberliegend angeordnet sind; die genannten dünnwandigen, plattenartigen Elemente über Brücken miteinander verbunden sind, die aus Leisten (5; 7-9; 18-20) bestehen, welche Wärme gut leiten, wodurch die genannte Heizungsvorrichtung in der Weise steuerbar ist, daß der mittels einer Pumpe bewirkte Strom des Zentralheizungswassers durch den Wärmetauscher angehalten werden kann, wenn das Haushaltswasser strömt, und das Zentralheizungswasser vermittels der genannten Pumpe durch den Wärmetauscher strömen kann, wenn der Strom des Haushaltswassers angehalten ist.

2. Hausheizungsvorrichtung nach Anspruch 1, dadurch gekennzeichnet, daß jeder Kanal für das zu erhitzende Haushaltswasser von dem daran angrenzenden Kanal für zu erhitzendes Zentralheizungswasser durch einen Abgaskanal getrennt ist.

3. Hausheizungsvorrichtung nach Anspruch 1 oder 2, dadurch gekennzeichnet, daß die Brücken in den Abgaskanälen aus parallelen Leisten 5 bestehen und daß die Brücken in den Wasserkanälen aus Zickzackleisten (7-9) bestehen, die senkrecht zu den parallelen Leisten (5) liegen.

4. Hausheizungsvorrichtung nach einem der Ansprüche 1 - 3, dadurch gekennzeichnet, daß die Einheit einen inneren Raum (13) aufweist, welch besagter Raum eine Brennkammer bildet, die an der einen Seite über Kanäle mit gasförmigem Brennstoff und Verbrennungsluft gespeist werden kann und aus der an der anderen Seite über Abgaskanäle Abgase abgeführt werden können.

5. Hausheizungsvorrichtung nach Anspruch 4, dadurch gekennzeichnet, daß die Kanäle (14, 16) für die zu erhitzenden Medien sich zumindest teilweise rings um den inneren Raum (13) erstrecken, der die Brennkammer bildet.

## Revendications

1. Appareil de chauffage domestique pour la fourniture d'eau chaude de chauffage central et d'eau chaude pour usages domestiques, comprenant un échangeur de chaleur (1) constitué d'un nombre d'éléments à parois minces (2, 4, 6; 17, 11a, 11b, 11c) reliés entre eux pour former un ensemble, caractérisé en ce que les éléments (2, 4, 6; 17, 11a, 11b, 11c) sont arrangés pour définir des conduits distincts pour les gaz de fumée, l'eau de chauffage central et l'eau pour usages domestiques; en ce que les partitions entre les conduits adjacents distincts sont formées par des éléments à parois minces du type plaque (2, 17), placés en opposition les uns par rapport aux autres; et en ce que lesdits éléments à parois minces du tue plaque sont reliés entre eux par des ponts se composant de bandes (5; 7-9; 18-20) qui conduisent bien la chaleur, ledit appareil de chauffage pouvant être contrôlé d'une manière telle que le courant d'eau de chauffage central crée à travers l'échangeur de chaleur à l'aide d'une pompe puisse être interrompu quand l'eau pour usages domestiques coule et que l'eau de chauffage central puisse circuler à travers l'échangeur de chaleur à l'aide de ladite pompe quand le courant d'eau pour usages domestiques est interrompu.

2. Appareil de chauffage selon la revendication 1, caractérisé en ce que chaque conduit pour l'eau à usages domestiques à chauffer est séparé d'un conduit adjacent pour l'eau de chauffage central à chauffer, par un conduit pour les gaz de fumée.

3. Appareil de chauffage domestique selon la revendication 1 ou 2, caractérisé en ce que les ponts dans les conduits pour les gaz de fumée se composent de bandes parallèles (5) et en ce que les ponts dans les conduits d'eau se composent de bandes en zigzag (7-9), disposées perpendiculairement aux bandes parallèles (5).

4. Appareil de chauffage domestique selon l'une quelconque des revendications 1 - 3, caractérisé en ce que l'ensemble comprend un espace interne (13), ledit espace formant une chambre de combustion, qui peut être alimentée, d'un côté, par l'intermédiaire de conduits avec du combustible gazeux et de l'air de combustion et duquel on peut évacuer, de l'autre côté, des gaz de fumée par l'intermédiaire des conduits pour les gaz de fumée.

5. Appareil de chauffage domestique selon la revendication 4, caractérisé en ce que les conduits (14, 16) pour les milieux à chauffer s'étendent au moins partiellement autour de l'espace interne (13), formant la chambre de combustion.
